# EUROPEAN PATENT APPLICATION

(11) **EP 2 503 713 A1**
(43) Date of publication of application: **26.09.2012**
(21) Application number: 10791177.8
(22) Date of filing: 22.03.2010
(51) Int. Cl.: H04B 17/00

(54) **SYSTEM AND METHOD FOR ANTENNA TESTING**

(30) Priority: 25.01.2010 CN 201010102830
(71) Applicant: ZTE Corporation, Shenzhen, Guangdong 518057 (CN)
(72) Inventor: GUO, Yang, Shenzhen Guangdong 518057 (CN); YU, Zhong, Shenzhen Guangdong 518057 (CN)
(74) Representative: Rapisardi, Mariacristina
(86) International application number: PCT/CN2010/071184
(87) International publication number: WO 2010/148671

(57) **Abstract**

This disclosure claims antenna testing system, including a signal transmission simulator, a channel emulator and an anechoic chamber; more than two antennae are set in the anechoic chamber; each antenna is connected with the signal transmission simulator through the channel emulator; the more than two antennae are located on the sphere which center is the position of the device under test. This disclosure claims an antenna testing method, comprising: more than one channel model for test is set in the signal transmission simulator; a channel model is selected from the more than one channel model; wireless signals are transmitted according to the selected channel model; after emulation processed by channel emulator, emulated wireless signals are transmitted through the antennae in anechoic chamber; DUT set in the anechoic chamber receives and then processes the signals transmitted from each antenna, and outputs the processing results.

## Description

### Field of the Invention

This disclosure relates to the antenna testing technology, and in particular to an antenna testing system, and an antenna testing method based on the testing system.

### Background of the Invention

With the development of modem industry, various communication products can ensure the communication quality only by having excellent transmitting and receiving performance. The indexes of evaluating the transmitting and receiving performance include the Total Radiated Power (TRP), the Total Radiated Sensitivity (TRS), the space radio frequency (OTA, Over The Air), and so on. It is required that the TRP be greater than a set threshold, and the TRS be less than a set threshold, so that the corresponding requirement for communication can be met. When both the TRP and the TRS meet the set threshold, it means that the testing indexes are good.

In order to ensure the normal use of mobile terminal device in network, the Cellular Telecommunications and Internet Association (CTIA) establishes the test standard of the OTA performance of mobile terminal, i.e. *The test plan for mobile station OTA performance.* At present, most operators require the OTA performance of the mobile terminal accessing the network thereof to be tested according to the CTIA standard. The TRP and the TRS should meet a certain limitation requirement.

For the traditional single-antenna system and the mobile terminal thereof, the test on indexes, such as TRP, TRS, is performed in the traditional anechoic chamber. Nowadays, the Long Term Evolution (LTE) system and the like are about to be industrialized, and the traditional single-antenna system and device will change gradually to the communication device and communication terminal with the Multiple Input Multiple Output (MIMO) multi-antenna technology. The traditional anechoic chamber cannot evaluate the corresponding communication performance of the OTA performance of the multi-antenna terminal. The related communication performance of the mobile terminal can be tested only by adding new device on the basis of the traditional anechoic chamber to compose a new anechoic chamber, and thereby evaluating the OTA performance of the MIMO system and the mobile terminal. Unfortunately, the current multi-antenna system is still being studied, so that there is no related testing system, and the related testing method also remains only in theory

### Summary of the Invention

On that account, this disclosure mainly aims to provide an antenna testing system for performing the space performance test on the multi-antenna system (multi-antenna device under test), and an antenna testing method based on the testing system. It can test the communication performance indexes of mobile terminal in the multi-antenna system, and can be easily implemented with low cost.

For achieving the aim, the technical solution of this disclosure is realized by:
an antenna testing system, which includes a signal transmission simulator (base station simulator), a channel emulator and an anechoic chamber; wherein the anechoic chamber is equipped with more than two antennae, each antenna is connected with the signal transmission simulator through the channel emulator to provide more than two transmitting signals to the Device Under Test (DUT), and the more than two antennae are located on a sphere which center is the position of the DUT.

Preferably, the number of the more than two antennae is greater than or equal to that of the diameters of the channel models.

Preferably, the channel models are Space Channel Model (SCM), or Space Channel Model Extension (SCME), or channel models defined by the European future communication standards Winner I or Winner II.

Preferably, when the more than two antennae are polarization antennae, two orthogonal polarization antennae are set at the same antenna position.

Preferably, the system further includes:
a signal mapping unit, configured for mapping the wireless signals output by the channel emulator to corresponding antennae, respectively.

Preferably, the signal transmission simulator is a base station simulator.

The technical solution of this disclosure is further realized by an antenna testing method based on the above-mentioned testing system, wherein more than one channel models for test are set in the signal transmission simulator; and the method comprises the following steps:
the signal transmission simulator selecting one channel model from the more than one channel models,
and transmitting wireless signals according to the selected channel model; and after the transmitted wireless signals are emulated by the channel emulator, the emulated wireless signals being transmitted through the antennae in the anechoic chamber; and
a DUT set in the anechoic chamber receiving and then processing the signals transmitted from each antenna, and outputting the processing results.

Preferably, the channel models are the SCM, or the SCME, or the channel models defined by the Winner I or Winner II.

Preferably, when the testing system includes a signal mapping unit, the signal mapping unit maps the wireless signals processed by the channel emulator to the antennae in the anechoic chamber, respectively.

Preferably, the signal transmission simulator is a base station simulator, the wireless signals are transmitted according to the time intervals set in the channel models, and the antennae in the anechoic chamber are distributed according to the space positions set in the channel models.

In this disclosure, the simulation for transmission of wireless signals in real system is implemented by setting multiple test antennae in the anechoic chamber, and correspondingly setting signal transmitting components such as the base station simulator and the channel simulator. The wireless signals are transmitted to the DUT (mobile terminal) through the antennae in the anechoic chamber. Then, the DUT performs related decoding process according to the received wireless signals, and outputs the corresponding processing results. Testing personnel can determine the wireless signal processing performance of the DUT under various communication conditions, according to the testing results output by the DUT, thereby implementing test on the communication performance indexes of the DUT. This disclosure is easily implemented with low cost, and capable of conveniently and quickly performing test on the communication performance indexes of the DUT.

### Brief Description of the Drawings

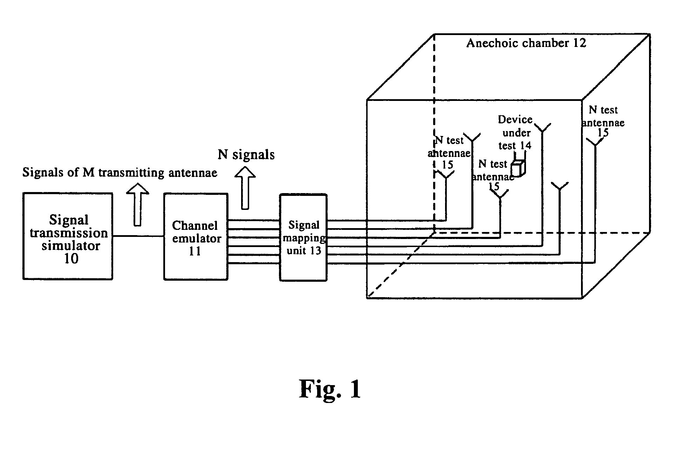

Fig. 1 shows a structural diagram of a testing system for a multi-antenna system according to this disclosure.

### Detailed Description of the Embodiments

In order to make the objective, the technical solution and the advantages of this disclosure more clear, this disclosure is described below in detail with reference to the drawings and embodiments.

Fig. 1 shows a structural diagram of a testing system for a multi-antenna system of this disclosure. As shown in Fig. 1, the testing system for a multi-antenna system of this disclosure includes a signal transmission simulator 10, a channel emulator 11 and an anechoic chamber 12. The anechoic chamber 12 is equipped with more than two (N) antennae (test antennae) 15. Each antenna 15 is connected with the signal transmission simulator 10 through the channel emulator 11 to provide the wireless signals (transmitting signals) with the same number as the antennae for the DUT 14. The N test antennae 15 are located on the sphere of which center is the position where the DUT 14 is located. The best way for placing the test antennae 15 is that the test antennae 15 are located on the circle of which center is the DUT 14. The test antennae 15 and the DUT 14 are on the same plane, which is usually the horizontal plane.

In this disclosure, the anechoic chamber 12 is a closed container made of anechoic material and having a certain space. Specifically, it is free of interference of external wireless signals. For example, outer surface of the anechoic material of the anechoic chamber 12 is equipped with metal shell, so as to avoid signal interference from the existing external wireless signals to the closed space in the anechoic chamber 12. The anechoic material can almost completely absorb the wireless signals reaching the anechoic wall of the anechoic chamber 12 without generating reflection of signal, so as to minimize the influence on the test of the device under test 14.

In this disclosure, the test on communication performance is mainly aimed at the DUT in the multi-antenna system. Therefore, the channel emulator 11 is specifically the MIMO channel emulator, i.e. the simulated channel capable of realizing multiple wireless signals, so as to achieve the channel characteristic in the real transmission of wireless signal. The channel emulator can be the currently commercially available channel emulator, and it is not the main point of implementation of the testing system in this disclosure, so that no further detail is given here.

In this disclosure, the signal transmission simulator 10 is specifically the base station simulator whose main function is how to implement transmission of wireless signals. Specifically, a test sequence (test data for testing) can form corresponding wireless signals by the signal transmission simulator 10, and then the wireless signals are output to the test antennae 15 in the anechoic chamber 12 through the MIMO channel emulator 11, and thereby implementing simulation for the wireless signals. The base station simulator can also be realized by the currently commercially available base station simulator. In this disclosure, the base station simulator 10 stores channel models which include but not limited to Space Channel Model (SCM), or Space Channel Model Extension (SCME), or the channel models defined by the European future communication standards Winner I or Winner II. The base station simulator 10 transmits the corresponding wireless signals at certain time interval(s), according to the related properties of the channel model. In this case, the positions of the test antennae 15 in the anechoic chamber 12 are set according to the space properties of these channel models. Specifically, these test antennae 15 can be arranged at a certain angle.

As shown in Fig. 1, the testing system for the multi-antenna system of this disclosure further includes a signal mapping unit 13, configured for mapping the wireless signals output by the channel emulator 11 to the corresponding antennae, respectively.

The number of the test antennae 15 in the anechoic chamber 12 is N which should be equal to or greater than the number of paths (main paths or clusters) of the used channel models. The test antennae 15 are located on the sphere of which center is the position of the DUT 14. Thus, when these test antennae 15 transmit the wireless signals simultaneously, it is ensured that these wireless signals can be received by the DUT 14 simultaneously, and then the test on communication performance of multi-antenna receiving of the DUT is ensured.

In this disclosure, the number of paths of the channel models is 6 or 8, so that the number of the optimized single-polarization test antennae is 6 or 8. For the dual-polarization test antennae, two orthogonal polarization antennae are needed to be configured at the same antenna position. The polarization directions of antenna include vertical polarization, horizontal polarization, 45-degree polarization and so on. When the test antenna is the dual-polarization test antenna, the optimum number of needed test antennae is correspondingly 6x2 or 8x2, i.e., 12 or 16. The number of test antennae in the anechoic chamber can be equal to but not limited to the optimum number. Specifically, the dual-polarization antennae in this disclosure can be the vertical polarization or the horizontal polarization antenna, or two antennae with orthogonal polarization directions in the cross-polarization (X polarization) antenna.

In this disclosure, the DUT 14 can be set at center of the anechoic chamber 12, which is convenient for the distribution of the test antennae 15 in the anechoic chamber 12. The shape of the anechoic chamber 12 shown in Fig. 1 of this disclosure is not intended for limitation. It can be any shape with closed space, such as hemisphere.

The multi-antenna testing method based on the testing system for the multi-antenna system shown in Fig. 1 is described below.

The base station simulator is used for simulating the transmitting signals of the base station, and outputting M transmitting signals of the base station, i.e. the transmitting signals of M antennae of the base station. The output signals of the base station simulator are input to the channel simulator to simulate the status that the signals of the base station pass through the space channel. The channel simulator outputs N signals, and then the N signals are output to the N test antennae in the anechoic chamber. In the above, mapping is performed between the N signals output by the channel simulator and the N test antennae according to a certain mapping relationship. The N test antennae spatially transmit signals. The DUT is at the center of the anechoic chamber. The N test antennae are arranged on the spherical circle of which center is the DUT according to a certain rule. The DUT receives the signals from space and processes the received signals, or transmits the signals outside through cable for post-processing, and verifies the received signals, thereby finishing the OTA test. The above is only a preferred embodiment of this disclosure, and should not be used for limiting the scope of this disclosure.

## Claims

1. An antenna testing system, including a signal transmission simulator equipped with more than one channel models, a channel emulator and an anechoic chamber, **characterized in that** the anechoic chamber is equipped with more than two antennae, each antenna is connected with the signal transmission simulator through the channel emulator to provide more than two transmitting signals to a device under test, and the more than two antennae are located on a sphere of which center is the position where the device under test is located.

2. The testing system according to claim l, **characterized in that** the number of the more than two antennae is greater than or equal to the number of the paths of the channel models.

3. The testing system according to claim 2, **characterized in that** the channel models are space channel model (SCM), or space channel model extension (SCME), or channel models defined by the European future communication standards Winner I or Winner II.

4. The testing system according to claim 1, **characterized in that** when the more than two antennae are polarization antennae, two orthogonal polarization antennae are set at the same antenna position.

5. The testing system according to any one of claims 1 to 4, **characterized by** further including: a signal mapping unit, configured for mapping wireless signals output by the channel emulator to corresponding antennae, respectively.

6. The testing system according to any one of claims 1 to 4, **characterized in that** the signal transmission simulator is a base station simulator.

7. An antenna testing method based on the testing system according to claim 1, **characterized in that** more than one channel models for test are set in a signal transmission simulator, and the method comprises steps of:
the signal transmission simulator selecting one channel model from the more than one channel models, and transmitting wireless signals according to the selected channel model; and after the transmitted wireless signals are emulated by a channel emulator, the emulated wireless signals being transmitted through antennae in a anechoic chamber; and
a device under test, which is set in the anechoic chamber, receiving and then processing the signals transmitted from each antenna, and outputting processing results.

8. The testing method according to claim 7, **characterized in that** the channel models are SCM, or SCME, or channel models defined by Winner I or Winner II.

9. The testing method according to claim 7 or 8, **characterized in that** when the testing system includes a signal mapping unit, the signal mapping unit maps each of the wireless signals processed by the channel emulator to the antennae in the anechoic chamber, respectively.

10. The testing method according to claim 9, **characterized in that** the signal transmission simulator is a base station simulator, the wireless signals are transmitted according to a time interval set in the channel model, and the antennae in the anechoic chamber are distributed according to space positions set in the channel model.
